# FASCICULE DE BREVET EUROPEEN

(11) **EP 1 167 941 B1**
(45) Date de publication et mention de la délivrance du brevet: **08.04.2009**
(21) Numéro de dépôt: 01401626.5
(22) Date de dépôt: 20.06.2001
(51) Int. Cl.: G01M 9/04

(54) **Dispositif de support d'un engin volant à moteur dans une soufflerie**
Vorrichtung zum Tragen eines motorisierten Flugkörpers in einem Windkanal
Support for a motorised flying device in a wind tunnel

(30) Priorité: 21.06.2000 FR 0007927
(43) Date de publication de la demande: 02.01.2002
(73) Titulaire: Aerospatiale Matra Missiles, 75781 Paris Cedex 16 (FR)
(72) Inventeur: Demay, Jean Paul, 94260 Fresnes (FR); Carton, Laurent, 18400 Saint Florent sur Cher (FR)
(74) Mandataire: Poulin, Gérard

(56) Documents cités:
- DE-B- 1 172 875
- JP-A- 04 120 434
- US-A- 4 920 791
- US-A- 5 370 349

## Description

### Domaine technique

L'invention concerne un dispositif conçu pour supporter un engin volant tel qu'un prototype ou une maquette de missile dans une soufflerie, afin d'étudier le comportement de l'engin sous différentes attitudes, avec son moteur allumé.

L'invention s'applique aux essais en soufflerie effectués sur tout type d'engins volants motorisés et notamment sur un prototype ou sur une maquette à échelle un, munie d'un moteur, d'un missile dont on désire étudier le comportement en temps réel dans une soufflerie supersonique, sans intervention manuelle, en reconstituant les évolutions en dynamique représentatives des attitudes de vol de l'engin.

### Etat de la technique

Comme l'illustrent notamment les documents FR-A-2 159 548 et FR-A-2 641 378, il est connu de tester en soufflerie le comportement aérodynamique d'une maquette d'un engin volant tel qu'un avion en montant cette maquette sur une perche reliée à la structure fixe de la soufflerie par un ensemble de mécanismes permettant de faire varier en temps réel l'attitude de la maquette en cours d'essai. Lorsque cette technique est utilisée, l'extrémité arrière de la maquette est reliée à l'extrémité avant de la perche et celle-ci s'étend vers l'arrière sensiblement dans le prolongement de la maquette.

Les dispositifs de support de ce type permettent d'étudier, sans intervention manuelle, le comportement aérodynamique des surfaces d'un engin volant qui sont en contact avec l'air environnant, lorsque l'attitude de l'engin évolue dans le temps.

En revanche, de tels dispositifs de support ne peuvent pas être utilisés pour étudier le comportement d'un engin volant dont le ou les moteurs sont allumés. En effet, la présence d'une perche sensiblement dans le prolongement de la maquette, à l'arrière de celle-ci, ne permet pas d'allumer un moteur situé dans l'axe longitudinal de l'engin et perturbe fortement l'écoulement de l'air sortant d'un moteur décalé par rapport à cet axe.

Actuellement, lorsque des engins volants sont essayés en soufflerie avec leurs moteurs allumés, on utilise des dispositifs de support de conception différente. Ces dispositifs de support comprennent plusieurs supports articulés reliant l'engin à la structure fixe de la soufflerie. Les supports articulés se présentent habituellement sous la forme de bras ou de pylônes dont l'un au moins comporte des moyens de réglage de longueur. Le plus souvent, trois ou quatre supports articulés sont utilisés.

Dans un tel dispositif de support, les supports articulés sont décalés vers l'arrière par rapport à la partie avant de l'engin, pour ne pas perturber l'écoulement de l'air dans cette zone. De plus, pour permettre l'étude du comportement de l'engin alors que son moteur est allumé, les supports articulés sont également localisés nettement en dehors des zones d'écoulement de l'air situées en amont et en aval du moteur.

Lorsqu'un tel dispositif de support est utilisé pour étudier le comportement d'un engin dont le moteur est allumé, les opérateurs règlent la configuration et l'attitude de vol souhaitées (valeur de dérapage, angle d'incidence, etc.) en agissant sur les moyens de réglage de longueur, avant de procéder à un essai. Lorsqu'une autre configuration et une autre attitude de vol doivent être testées, il est nécessaire de stopper le moteur de l'engin et d'intervenir à nouveau manuellement sur les moyens de réglage de longueur avant de procéder à un nouvel essai.

Cette technique classique est particulièrement longue et fastidieuse à mettre en oeuvre. De plus, elle ne permet pas d'étudier le comportement dynamique, en temps réel, d'un engin dont le moteur est allumé. En particulier, les dispositifs de support existants sont inopérants pour étudier le comportement d'un engin dont le moteur est allumé lorsqu'il décrit une trajectoire ou une fraction de trajectoire déterminée.

Le document JP 04 120 434 A divulgue un dispositif de support d'un engin volant dans une soufflerie conforme au préambule de la revendication 1.

### Exposé de l'invention

L'invention a précisément pour objet un dispositif de support conçu pour permettre l'étude du comportement d'un engin volant à moteur dans une soufflerie lorsque le moteur de l'engin est allumé, en autorisant une modification en temps réel de l'attitude de l'engin afin notamment de simuler une trajectoire ou une fraction de trajectoire suivie par celui-ci.

Conformément à l'invention, ce résultat est obtenu au moyen d'un dispositif apte à supporter un engin volant à moteur dans une soufflerie, pour étudier le comportement dudit engin, moteur allumé, sous différentes attitudes, conformêment à la revendication 1.

Du fait que les moyens de réglage de longueur sont commandés à distance, l'attitude de l'engin peut être modifiée en temps réel, sans intervention manuelle. Il devient ainsi possible, notamment, d'étudier le comportement d'un engin volant dont le moteur est allumé, en simulant une trajectoire ou une fraction de trajectoire suivie par cet engin.

Avantageusement, le support avant est orienté sensiblement radialement par rapport à l'axe longitudinal de l'engin et disposé dans un plan vertical passant par cet axe. Les supports arrière sont alors orientés radialement par rapport à l'axe longitudinal de l'engin et disposés symétriquement par rapport au plan vertical précité, lorsque les deux supports arrière sont dans un état initial correspondant notamment à une valeur de dérapage nulle et à un angle d'incidence nul.

Dans ce même état initial, les supports arrière forment de préférence avec le plan vertical un angle tel que le montage de l'engin sur le dispositif soit isostatique. Cet angle est par exemple sensiblement égal à 45°.

Dans le mode de réalisation préféré de l'invention, les supports arrière sont décalés vers l'arrière d'environ un mètre par rapport au support avant, selon l'axe longitudinal de l'engin.

Par ailleurs, les moyens de réglage de longueur sont constitués de préférence par des vérins hydrauliques asservis en longueur.

Afin de réduire autant que possible la perturbation de l'écoulement d'air induite par les supports avant et arrière, chacun de ces supports est généralement placé à l'intérieur d'un capot caréné. Ce capot assure également la protection thermique des supports et participe à leur tenue mécanique.

Pour assurer la maîtrise en temps réel de la configuration et des attitudes de vol de l'engin, des moyens de mesure angulaire tels que des résolveurs sont avantageusement associés aux moyens d'articulation.

Pour tenir compte des échauffements importants qui se produisent dans la soufflerie, à proximité de l'engin (environ 350°C), des moyens de refroidissement sont en outre avantageusement prévus pour refroidir les liaisons à pivot et les moyens de mesure angulaire situés à proximité immédiate de l'engin.

### Brève description des dessins

On décrira à présent, à titre d'exemple non limitatif, un mode de réalisation préféré de l'invention, en se référant aux dessins annexés, dans lesquels :
- la figure 1 est une vue de côté qui représente schématiquement un engin volant à moteur monté dans un tunnel de soufflerie par un dispositif de montage conforme à l'invention ;
- la figure 2 est une vue de face illustrant schématiquement l'engin dans son état initial (trait plein), avec un angle d'incidence modifié (traite mixte) et avec une valeur de dérapage modifiée (trait tireté) ;
- la figure 3 est une vue en perspective du support avant caréné du dispositif de montage selon l'invention ;
- la figure 4 est une vue de face, à plus grande échelle et en coupe partielle, du support avant ; et
- la figure 5 est une vue de face, en coupe partielle, des supports arrière du dispositif de montage selon l'invention.

### Description détaillé d'un mode de réalisation préféré de l'invention

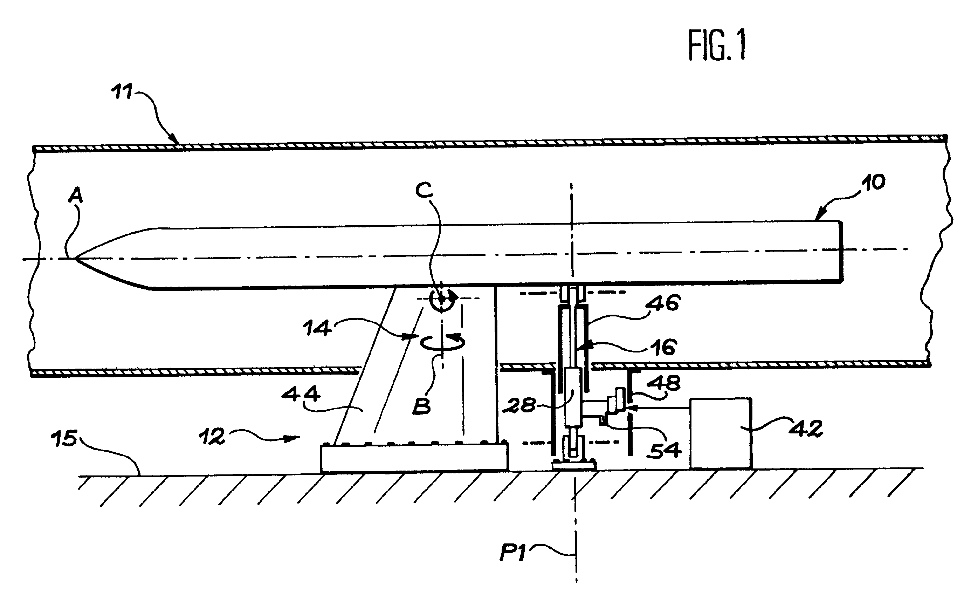

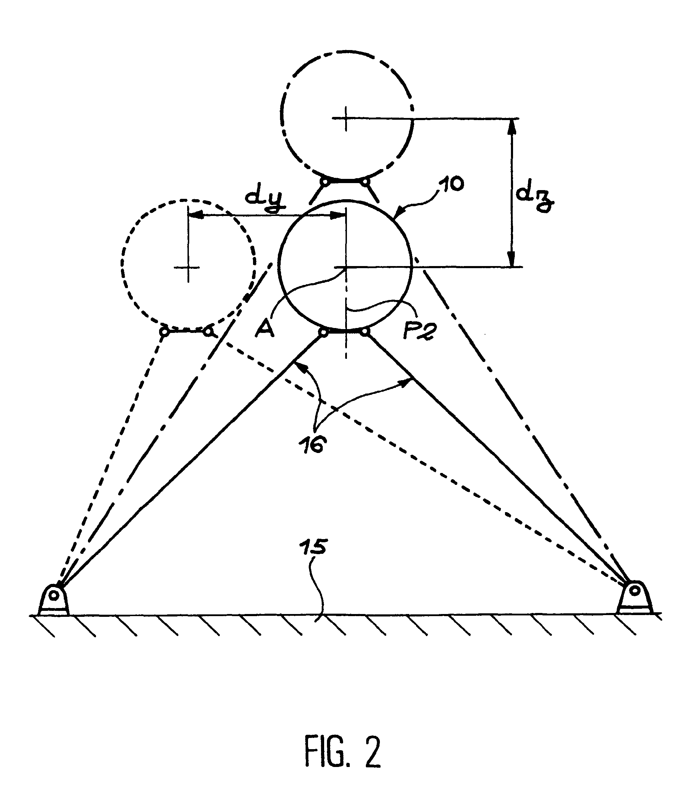

Sur les figures 1 et 2, on a représenté schématiquement un engin volant 10 tel qu'un prototype ou une maquette de missile, placé dans un tunnel de soufflerie 11. L'engin volant 10 est doté d'un ou plusieurs moteurs prévus pour être allumés lorsque les essais en soufflerie sont réalisés.

Conformément à l'invention, l'engin volant 10 est relié à la structure fixe du tunnel de soufflerie par un dispositif de support 12 conçu pour simuler, en temps réel et sans intervention manuelle, des évolutions en dynamique de l'engin 10, représentatives des attitudes de vol de celui-ci lorsqu'il parcourt une trajectoire ou une fraction de trajectoire donnée.

Dans le mode de réalisation préféré de l'invention illustré sur les figures, le dispositif de support 12 comprend un support avant 14 et deux supports arrière 16.

Dans ce cas, le support avant 14, de longueur invariable, relie l'engin 10 au plancher 15 de la structure fixe du tunnel de soufflerie 11. Il est situé dans un plan vertical passant par l'axe longitudinal A de l'engin 10 et orienté sensiblement radialement vers le bas par rapport à cet axe.

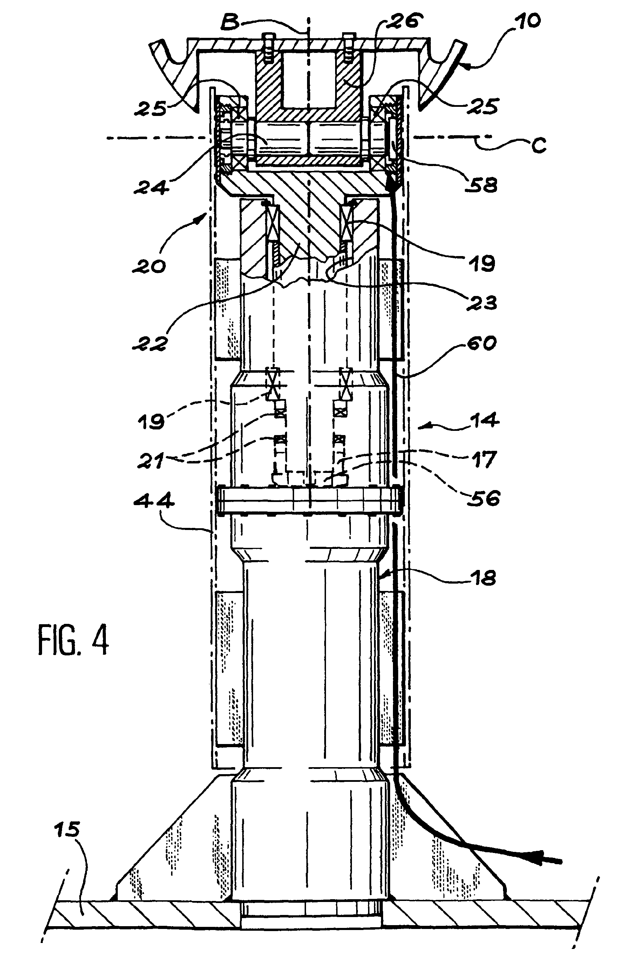

Comme l'illustre plus précisément la figure 4, le support avant 14 comprend un pylône vertical 18 constitué par un tube métallique rigide dont l'extrémité basse est fixée au plancher 15 de la structure fixe du tunnel de soufflerie 11 et dont l'extrémité haute supporte l'engin volant 10, par l'intermédiaire de moyens d'articulation 20. Ces moyens d'articulation 20 définissent au moins deux degrés de liberté de rotation autour de deux axes B et C orientés selon deux directions orthogonales entre elles et à l'axe longitudinal A de l'engin 10. Un premier B de ces deux axes est confondu avec l'axe vertical du pylône 18. Le second axe C, orienté selon une direction transversale par rapport à l'engin 10, passe de préférence approximativement par la génératrice inférieure de celui-ci.

De façon plus précise, les moyens d'articulation 20 comprennent un mât vertical 22 dont une partie basse formant pivot est reçue dans un alésage 23 formé dans le pylône 18, selon l'axe B. Cet agencement permet au mât 22 de pivoter librement autour de l'axe vertical B du pylône 18, par l'intermédiaire de paliers 19. Des butées à rouleau 21, bloquées par un écrou 17, sont également prévues entre le pied du pylône 18 et le mât 22, pour permettre d'avoir un système sans jeu. Le pylône 18 est réalisé en deux parties, pour permettre le montage des paliers 19, des butées 21 et d'un résolveur 56 qui sera décrit ultérieurement.

Dans sa partie haute, située au-dessus du pylône 18, le mât 22 forme une chape dans laquelle est reçu un pivot 24, par l'intermédiaire de paliers 25. Ce pivot 24 est solidaire d'une chape complémentaire 26 fixée sous l'engin volant 10 sur lequel des essais doivent être effectués. L'axe du pivot 24 correspond à l'axe transversal C défini précédemment. Cet agencement permet à l'engin 10 de pivoter librement autour de l'axe C, par rapport au mât 22.

La chape 26, par laquelle le support avant 14 est fixé à l'engin volant 10, est située dans la moitié avant de cet engin. Toutefois, cet emplacement est décalé vers l'arrière par rapport à la partie avant de l'engin, de façon à ne pas perturber l'écoulement d'air dans cette région particulièrement sensible. A titre d'illustration nullement limitative de l'invention, la chape 26 est située à au moins un tiers de la longueur de l'engin 10, en partant de sa pointe avant.

Il est à noter qu'en variante, au lieu d'être placé en dessous de l'engin volant 10, le support avant 14 pourrait être situé au-dessus de celui-ci et relié par son extrémité haute au plafond (non représenté) de la structure fixe du tunnel de soufflerie 11.

Comme l'illustre la figure 1, les deux supports arrière 16 sont orientés radialement par rapport à l'axe longitudinal A de l'engin 10 et situés dans un même plan vertical P1 perpendiculaire à cet axe, de préférence environ un mètre derrière le support avant 10. Plus précisément, lorsque le dispositif de support 12 est dans son état initial, dans lequel l'incidence et le glissement sont nuls, comme illustré en trait plein sur la figure 2, les deux supports arrière 16 (illustrés ici schématiquement par des segments) sont disposés symétriquement de part et d'autre du plan vertical P2 passant par le support avant 14 et par l'axe longitudinal A de l'engin 10.

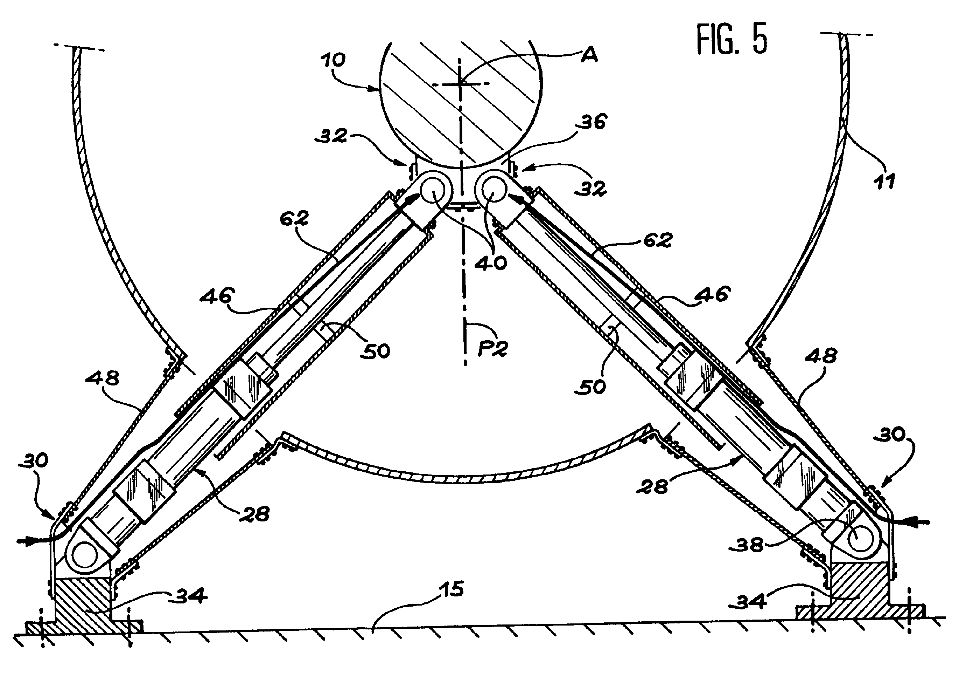

Comme l'illustre la figure 5, chacun des supports arrière 16 comprend des moyens de réglage de longueur constitués, dans le mode de réalisation représenté, par des vérins hydrauliques 28 asservis en longueur. Plus précisément, chacun des supports arrière 16 comprend essentiellement un vérin hydraulique 28 et deux liaisons à pivots 30 et 32 par lesquels les extrémités opposées du vérin 28 sont articulées respectivement sur une première chape 34 fixée au plancher 15 de la structure fixe du tunnel de soufflerie 11 et une deuxième chape 36 fixée sous l'engin volant 10.

L'extrémité basse de chacun des vérins hydrauliques 28 est articulée sur la chape 34 correspondante par un pivot 38 orienté parallèlement à l'axe longitudinal A de l'engin 10. De façon comparable, l'extrémité haute de chacun des vérins hydrauliques 28 est articulée sur la chape 36 par un pivot 40 dont l'axe est orienté parallèlement à l'axe longitudinal A de l'engin 10.

Lorsque le dispositif de support 12 se trouve dans son état initial défini précédemment, les deux vérins hydrauliques 28 (et, par conséquent, les deux supports arrière 16) ont la même longueur. De plus, ils sont inclinés l'un et l'autre de 45° par rapport au plan vertical P2 passant par l'axe longitudinal A de l'engin, de façon à former entre eux un angle de 90°.

L'agencement qui vient d'être décrit est tel que le montage de l'engin 10 sur la structure fixe de la soufflerie, assuré par le dispositif de support 12, est isostatique.

Les vérins hydrauliques 28 constituant les moyens de réglage de longueur sont reliés à des moyens de commande à distance 42 (figure 1). Ces moyens de commande à distance 42 agissent sur les vérins hydrauliques 28, en temps réel et sans intervention manuelle, pour en modifier la longueur de façon contrôlée. On peut ainsi faire varier en temps réel et en continu des caractéristiques propres à l'attitude de l'engin lors d'un vol, telles que le dérapage et/ou l'incidence, alors que le moteur de l'engin est en fonctionnement. Cet agencement permet d'étudier le comportement de l'engin 10, moteur allumé, sous différentes attitudes et notamment lors d'une trajectoire complète ou d'une fraction de trajectoire susceptible d'être suivie ultérieurement par l'engin.

Ainsi, on voit en trait mixte sur la figure 2, qu'une même augmentation de longueur de chacun des deux vérins 28 se traduit par une augmentation dz de la hauteur de l'engin 10 dans le plan vertical P1. Du fait que la hauteur de l'engin dans le plan vertical passant par le support avant 14 reste inchangée, on passe ainsi d'une incidence nulle à une incidence négative contrôlée.

De façon comparable, on voit en trait tireté sur la figure 2 que la combinaison d'une augmentation de longueur de l'un des vérins 28 et d'une diminution de longueur de l'autre vérin 28, dans une relation contrôlée par les moyens de commande à distance 42, se traduit par un décalage latéral dy de l'engin dans le plan P12. On passe ainsi d'un glissement nul à un glissement contrôlé, vers la droite ou vers la gauche.

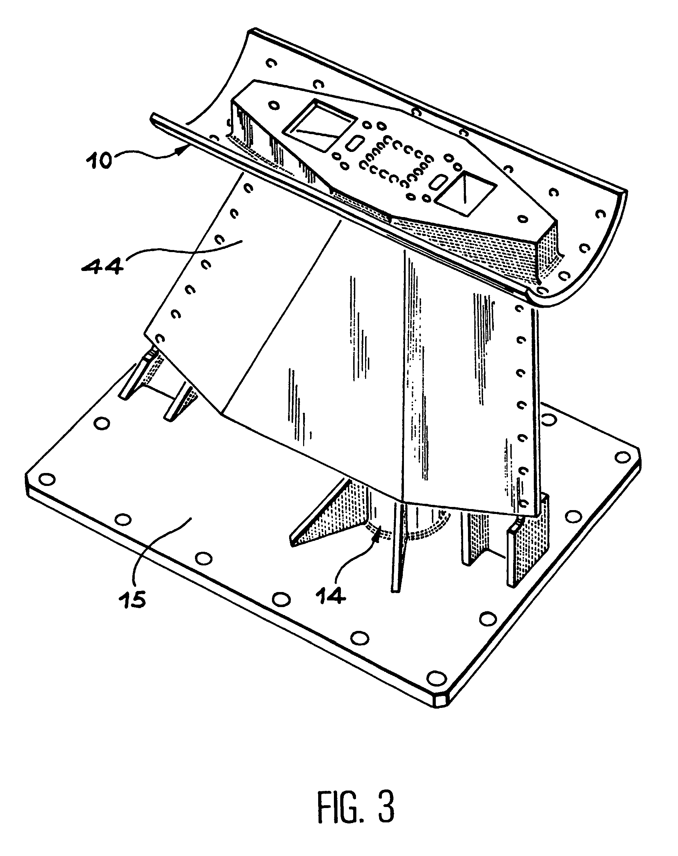

Comme l'illustrent les figures 3 et 4, le support avant 14, dont la longueur est invariable, est logé à l'intérieur d'un capot caréné 44. Ce capot présente en section approximativement la forme d'un losange à coins cassés, dont la grande diagonale est orientée parallèlement à l'axe A de l'engin. Il est à noter que la section du capot caréné 44 augmente progressivement en s'éloignant de l'engin 10.

De façon comparable (figure 5), chacun des supports arrière 16 est placé à l'intérieur d'un capot caréné 46 qui présente également en section approximativement la forme d'un losange dont la grande diagonale est orientée parallèlement à l'axe A de l'engin 10. Le carénage 46 est fixé à l'extrémité haute du vérin 28 correspondant, articulée sur la chape 36 par le pivot 40. L'extrémité inférieure de chacun des capots 46 pénètre librement dans un manchon 48 qui entoure la partie basse du vérin 28. Les extrémités inférieure et supérieure de chacun des manchons 48 sont fixées respectivement à la chape 34 et au tunnel de soufflerie 11. L'agencement est tel que la partie haute du manchon 48 est raccordée sur le tunnel de soufflerie 11 en un emplacement tel que l'extrémité basse du capot 46 se trouve toujours à l'intérieur du manchon 48 lorsque l'extension du vérin 28 est maximale. Le positionnement de la partie basse du capot 46 autour du vérin 28 est assuré par une bague de centrage 50 fixée sur le capot 46 et permettant le coulissement de la tige du vérin 28 (le capot 46 suit les mouvements du vérin).

Chacun des manchons 48 loge des organes de commande 54 (figure 1) du vérin 28 correspondant. Ces organes de commande 54 comprennent notamment une servovalve ainsi qu'un système de clapet relié aux moyens de commande à distance 42. Le positionnement des organes de commande 54 à l'extérieur de la paroi 50 du tunnel de la soufflerie permet de placer ces organes en dehors des régions chaudes situées à proximité de l'engin en cours d'essai. Ces régions chaudes atteignent en effet des températures très élevées, généralement voisines de 350°C.

Afin d'assurer un contrôle très précis des angles de pivotement autour des axes B et C définis par les moyens d'articulation 20 du support avant 14, un premier moyen de mesure angulaire 56 (figure 4) est interposé entre le mât 22 et le pylône 18 pour mesurer les rotations autour de l'axe B et un deuxième moyen de mesure angulaire 58 est interposé entre le mât 22 et la chape 26, pour mesurer les rotations autour de l'axe C. Ces deux moyens de mesure angulaire 56 et 58 sont constitués avantageusement par des résolveurs aptes à fournir une mesure angulaire dont la précision est d'environ un centième de degré.

Le premier résolveur 56 est placé à l'intérieur du pylône 18. Il est donc protégé de la haute température qui règne à l'intérieur du tunnel de soufflerie. En revanche, le deuxième résolveur 58 est placé à proximité immédiate de la paroi de l'engin en cours d'essai et il n'est séparé de l'air très chaud environnant que par la tôle du capot 44.

Par conséquent, des moyens de refroidissement sont avantageusement prévus pour le résolveur 58. Ces moyens de refroidissement comprennent un tube 60 (illustré schématiquement par une ligne sur la figure 4) logé à l'intérieur du capot 44 et permettant d'acheminer jusqu'au résolveur 58 de l'air frais en provenance d'un système de refroidissement (non représenté) situé à l'extérieur du tunnel de soufflerie 11.

De façon comparable, des moyens de refroidissement sont prévus pour refroidir chacun des pivots 40 par lesquels les vérins 28 sont articulés sur la chape 36 fixée à l'engin 10. Les débits d'air des moyens de refroidissement sont contrôlés par l'intermédiaire de cols calibrés situés à l'extrémité des tubes, au niveau des parties à refroidir (par exemple, 100g/s). Ces moyens de refroidissement comprennent, là encore, des tubes 62 (illustrés schématiquement par des lignes sur la figure 5) cheminant à l'intérieur du capot 46 correspondant ainsi qu'à l'intérieur du manchon 48. A leur extrémité située à l'extérieur du tunnel de soufflerie 11, ces tubes 62 sont également raccordés sur un circuit de refroidissement (non représenté) délivrant de l'air froid. Il est à noter que les tubes 62 comportent au moins une partie télescopique ou souple leur permettant de supporter les variations de longueur des vérins hydrauliques 28 des supports arrière 16 correspondants.

Bien entendu, l'invention n'est pas limitée au mode de réalisation qui vient d'être décrit à titre d'exemple, mais en couvre toutes les variantes. Ainsi, on comprendra notamment que le support avant et/ou les supports arrières pourraient être placés non pas en dessous mais au-dessus de l'engin en cours d'essai, sans sortir du cadre de l'invention. Par ailleurs, les vérins hydrauliques 28 peuvent être remplacés par des vérins électriques, à condition que leur temps de réponse relativement long soit compatible avec la trajectoire simulée, ou par des vérins pneumatiques, à condition que le volume occupé par ceux-ci ne soit pas trop pénalisant. Enfin, les moyens d'articulation 20 peuvent intégrer un troisième degré de liberté de rotation orthogonal aux deux degrés de liberté de rotation décrits.

## Revendications

1. Dispositif (12) apte à supporter un engin volant (10) dans une soufflerie, pour étudier le comportement dudit engin (10) sous différentes attitudes, ledit dispositif comprenant plusieurs supports articulés (14,16) aptes à relier l'engin (10) à une structure fixe (15) de la soufflerie, l'un au moins desdits supports comportant des moyens de réglage de longueur (28) reliés à des moyens de commande à distance (42) aptes à modifier en temps réel l'attitude de l'engin, **caractérisé en ce que**, l'engin (10) étant un engin à moteur dont on étudie le comportement moteur allumé, les supports articulés (14, 16) sont situés en des emplacements décalés par rapport à des zones d'écoulement d'air situées autour d'une partie avant de l'engin et en amont et en aval du moteur, et les supports comprennent un support avant (14), de longueur invariable, intégrant des moyens d'articulation (20) à au moins deux degrés de liberté de rotation autour de deux axes (B,C) orientés selon deux directions orthogonales entre elles et à un axe longitudinal (A) de l'engin, et deux supports arrière (16) intégrant chacun des moyens de réglage de longueur (28) et des liaisons à pivots (30,32).

2. Dispositif selon la revendication 1, dans lequel le support avant (14) est orienté selon une direction sensiblement radiale par rapport à l'axe longitudinal de l'engin (10) et disposé dans un plan vertical (P2) passant par ledit axe longitudinal (A), les supports arrière (16) étant orientés selon des directions sensiblement radiales par rapport audit axe longitudinal (A) et disposés symétriquement par rapport audit plan vertical (P2), lorsque les deux supports arrière (16) sont dans un état initial.

3. Dispositif selon la revendication 2, dans lequel, dans leur état initial, les deux supports arrière (16) forment avec ledit plan vertical (P2) un angle tel que le montage de l'engin (10) sur le dispositif (12) soit isostatique.

4. Dispositif selon la revendication 3, dans lequel ledit angle est sensiblement égal à 45°.

5. Dispositif selon l'une quelconque des revendications 2 à 4 dans lequel les supports arrière (16) sont décalés vers l'arrière d'environ un mètre par rapport au support avant (14), selon ledit axe longitudinal (A).

6. Dispositif selon l'une quelconque des revendications 1 à 5, dans lequel les moyens de réglage de longueur sont des vérins hydrauliques (28) asservis en longueur.

7. Dispositif selon l'une quelconque des revendications 1 à 6, dans lequel chacun desdits supports (14,16) est placé à l'intérieur d'un capot caréné (44,46).

8. Dispositif selon l'une quelconque des revendications 1 à 7, dans lequel des premiers moyens de refroidissement (62) sont prévus pour refroidir les liaisons à pivots (32) situées à proximité immédiate de l'engin.

9. Dispositif selon l'une quelconque des revendications 1 à 8, dans lequel des moyens de mesure angulaire (56,58) sont associés aux moyens d'articulation (20), des deuxièmes moyens de refroidissement (60) étant prévus pour refroidir les moyens de mesure angulaire (58) situés à proximité immédiate de l'engin.

## Claims

1. A device (12) able to support a flying instrument (10) in a wind tunnel, for the purpose of studying the behaviour of said instrument (10), under different attitudes, said device including several articulated supports (14, 16) able to connect the instrument (10) to a fixed structure (15) of the wind tunnel, at least one of said supports comprising length adjustment means (28) connected to remote control means (42) able to modify in real time the instrument attitude, **characterized in that,** the instrument (10) being a motorized instrument of which the behaviour is studied with its motor on, the articulated supports (14, 16) are located at points offset relative to airflow zones located around a front part of the instrument and upstream and downstream of the motor and
the supports include a front support (14), of invariable length, incorporating articulation means (20) to at least two degrees of freedom of rotation around two axes (B, C) oriented along two directions orthogonal to each other and to a longitudinal axis (A) of the instrument, and two rear supports (16) each incorporating length adjustment means (28) and pivot connections (30, 32).

2. A device according to claim 1, wherein the front support (14) is oriented along an approximately radial direction relative to the longitudinal axis of the instrument (10) and arranged in a vertical plane (P2) passing through said longitudinal axis (A), the rear supports (16) being oriented along approximately radial directions relative to said longitudinal axis (A) and arranged symmetrically relative to said vertical plane (P2), when the two rear supports (16) are in an initial state.

3. A device according to claim 2, wherein, in their initial state, the rear supports (16) form with said vertical plane (P2) an angle such that the mounting of the instrument (10) on the device (12) is isostatic.

4. A device according to claim 3, wherein said angle is approximately equal to 45°.

5. A device according to any one of claims 2 to 4 wherein the rear supports (16) are offset towards the rear by about one metre relative to the front support (14), along said longitudinal axis (A).

6. A device according to any one of claims 1 to 5 wherein the length adjustment means are hydraulic jacks (28) servo-controlled lengthwise.

7. A device according to any one of claims 1 to 6, wherein each of said supports (14, 16) is placed inside a streamlined casing (44, 46).

8. A device according to any one of claims 1 to 7, wherein first cooling means (62) are provided to cool the pivot connections (32) located in the immediate vicinity of the instrument.

9. A device according to any one of claims 1 to 8, wherein angular measurement means (56, 58) are associated with the articulation means (20), second cooling means (60) being provided to cool the angular measurement means (58) located in the immediate vicinity of the instrument.

## Patentansprüche

1. Vorrichtung (12), die zum Tragen eines Fluggeräts (10) in einem Windkanal zur Untersuchung des Verhaltens des Geräts (10) in verschiedenen Stellungen geeignet ist, wobei die Vorrichtung mehrere verstellbare Stützen (14,16) umfasst, die zur Verbindung des Geräts (10) mit einer festen Struktur (15) des Windkanals geeignet sind, wobei mindestens eine der Stützen Mittel zur Längenregelung (28) umfasst, die mit Fernbedienungsmitteln (42) verbunden sind, die in Echtzeit die Stellung des Geräts modifizieren können,
**dadurch gekennzeichnet, dass** das Gerät (10) ein Gerät mit einem Motor ist, dessen Verhalten bei laufendem Motor untersucht wird, wobei sich die verstellbaren Stützen (14,16) an Orten befinden, die in Bezug auf Luftströmungszonen, die sich etwa in einem Bereich vor dem Gerät und stromaufwärts und stromabwärts des Motors befinden, entfernt angeordnet sind, und die Stützen eine vordere Stütze (14) einer nicht variablen Länge, die als wesentlichen Bestandteil Gelenkmittel (20) mit mindestens zwei Rotationsfreiheitsgraden um zwei Achsen (B,C) die in zwei zueinander und zu einer Längsachse (A) des Geräts orthogonalen Richtungen ausgerichtet sind, enthält, und zwei hintere Stützen (16), die als wesentlichen Bestandteil jeweils Mittel zur Längenregelung (28) und Schwenkbolzenverbindungen (30,32) enthalten, umfassen.

2. Vorrichtung nach Anspruch 1, in der die vordere Stütze (14) in einer in Bezug auf die Längsachse des Geräts (10) im wesentlichen radialen Richtung ausgerichtet und in einer durch die Längsachse (A) gehenden vertikalen Ebene (P2) angebracht ist, die hinteren Stützen (16) in in Bezug auf die Längsachse (A) im wesentlichen radialen Richtungen ausgerichtet und in Bezug auf die vertikale Ebene (P2) symmetrisch angebracht sind, wenn sich die zwei hinteren Stützen (16) in einem Ausgangszustand befinden.

3. Vorrichtung nach Anspruch 2, in der in deren Ausgangszustand die zwei hinteren Stützen (16) mit der vertikalen Ebene (P2) einen derartigen Winkel bilden, dass die Anbringung des Geräts (10) an der Vorrichtung (12) isostatisch ist.

4. Vorrichtung nach Anspruch 3, in der dieser Winkel im wesentlichen gleich 45° ist.

5. Vorrichtung nach einem der Ansprüche 2 bis 4, in der die hinteren Stützen (16) in Bezug auf die vordere Stütze (14) längs der Längsachse (A) um etwa einen Meter versetzt sind.

6. Vorrichtung nach einem der Ansprüche 1 bis 5, in der die Mittel zur Längenregelung in der Länge verstellbare hydraulische Winden (28) sind.

7. Vorrichtung nach einem der Ansprüche 1 bis 6, in der jede der Stützen (14,16) im Inneren einer Verkleidung (44,46) in Stromlinienform plaziert ist.

8. Vorrichtung nach einem der Ansprüche 1 bis 7, in der erste Kühlmittel (62) zum Kühlen der Schwenkbolzenverbindungen (32), die sich in der unmittelbaren Umgebung des Geräts befinden, angebracht sind.

9. Vorrichtung nach einem der Ansprüche 1 bis 8, in der Mittel zur Winkelmessung (56,58) mit Gelenkmitteln (20) in Verbindung stehen, wobei zweite Kühlmittel (60) zum Kühlen der Mittel zur Winkelmessung (58), die sich in der unmittelbaren Umgebung des Gerätes befinden, angebracht sind.
